# EUROPEAN PATENT APPLICATION

(11) **EP 3 453 829 A1**
(43) Date of publication of application: **13.03.2019**
(21) Application number: 18192488.7
(22) Date of filing: 04.09.2018
(51) Int. Cl.: F01D 5/14, F01D 17/16

(54) **INLET GUIDE VANE HAVING A VARIED TRAILING EDGE GEOMETRY**

(30) Priority: 08.09.2017 US 201715698997
(71) Applicant: United Technologies Corporation, Farmington, CT 06032 (US)
(72) Inventor: ELEY, James A., Middletown, CT Connecticut 06457 (US); GROVER, Eric A., Tolland, CT Connecticut 06084 (US); PRAISNER, Thomas J., Colchester, CT Connecticut 06415 (US)
(74) Representative: Dehns

(57) **Abstract**

An inlet guide vane (300) having varied trailing edge geometry is provided. The inlet guide vane (300) may have an inner diameter edge (355) opposite an outer diameter edge (357), and may comprise a leading edge part (310) and a trailing edge part (350). The trailing edge part (350) may comprise a trailing edge length (11) defining a length between a forward edge (352) and an aft edge (354). The trailing edge length (11) may vary in length. The trailing edge part (350) may be displaced from the leading edge part (310) at a stagger angle. The stagger angle may vary in displacement.

## Description

### FIELD

The present disclosure relates to gas turbine engines, and more specifically, to inlet guide vanes having varied trailing edge geometries for gas turbine engines.

### BACKGROUND

Gas turbine engines typically include a fan section to drive inflowing air, a compressor section to pressurize inflowing air, a combustor section to burn a fuel in the presence of the pressurized air, and a turbine section to extract energy from the resulting combustion gases. The fan section, compressor section, and/or the turbine section may include rotatable blades and stationary vanes, including an inlet guide vane configured to direct air into each respective section.

### SUMMARY

In various embodiments, an inlet guide vane is disclosed. The inlet guide vane may comprise an inner diameter edge opposite an outer diameter edge; a leading edge part; and a trailing edge part. The trailing edge part may have a forward edge opposite an aft edge and a first surface opposite a second surface, wherein the forward edge is coupled to the leading edge part, wherein the trailing edge part comprises a trailing edge length defining a length between the forward edge and the aft edge, wherein the trailing edge length varies in length, wherein the trailing edge part is displaced from the leading edge part at a stagger angle, and wherein the stagger angle varies in displacement.

In various embodiments, the first surface of the trailing edge part may comprise a sinusoidal shape relative to the second surface such that the stagger angle varies in displacement. The aft edge of the trailing edge part may comprise a sinusoidal shape relative to the forward edge such that the trailing edge length varies in length. The trailing edge length and the stagger angle may vary based on a vibration mode of a downstream rotor. The trailing edge length may vary in length from the inner diameter edge to the outer diameter edge, and the stagger angle may vary in displacement from the inner diameter edge to the outer diameter edge. The trailing edge part may comprise a first position between the inner diameter edge and the outer diameter edge, wherein the trailing edge length varies in length from the first position to the outer diameter edge, and wherein the stagger angle varies in displacement from the first position to the outer diameter edge. The trailing edge part may comprise the first position between the inner diameter edge and the outer diameter edge proximate the inner diameter edge and a second position between the inner diameter edge and the outer diameter edge proximate the outer diameter edge, wherein the trailing edge length varies in length from the first position to the second position, and wherein the stagger angle varies in displacement from the first position to the second position.

In various embodiments, a gas turbine engine component for use as an airfoil is disclosed. The gas turbine engine component may comprise a leading edge part and a trailing edge part. The trailing edge part may be integrally formed with the leading edge part, the trailing edge part having a forward edge opposite an aft edge and an inner diameter edge opposite an outer diameter edge, wherein the trailing edge part comprises a trailing edge length defining a length between the forward edge and the aft edge, wherein the trailing edge length varies in length, wherein the trailing edge part is displaced from the leading edge part at a stagger angle, and wherein the stagger angle varies in displacement.

In various embodiments, the trailing edge part may comprise a first surface opposite a second surface, and the first surface may comprise a sinusoidal shape relative to the second surface such that the stagger angle varies in displacement. The aft edge of the trailing edge part may comprise a sinusoidal shape relative to the forward edge such that the trailing edge length varies in length. At least one of the trailing edge length or the stagger angle may vary based on a vibration mode of a downstream rotor. The trailing edge length may vary in length from the inner diameter edge to the outer diameter edge, and the stagger angle may vary in displacement from the inner diameter edge to the outer diameter edge. The trailing edge part may comprise a first position between the inner diameter edge and the outer diameter edge, wherein the trailing edge length varies in length from the first position to the outer diameter edge, and wherein the stagger angle varies in displacement from the first position to the outer diameter edge. The trailing edge part may comprise the first position between the inner diameter edge and the outer diameter edge proximate the inner diameter edge and a second position between the inner diameter edge and the outer diameter edge proximate the outer diameter edge, wherein the trailing edge length varies in length from the first position to the second position, and wherein the stagger angle varies in displacement from the first position to the second position.

In various embodiments, a gas turbine engine is disclosed. The gas turbine engine may comprise a fan section, a compressor section, and a turbine section. At least one of the fan section, the compressor section, or the turbine section may comprise an inlet guide vane for directing airflow. The inlet guide vane may comprise an inner diameter edge opposite an outer diameter edge; a leading edge part; and a trailing edge part having a forward edge opposite an aft edge and a first surface opposite a second surface, wherein the forward edge is coupled to the leading edge part, wherein the trailing edge part comprises a trailing edge length defining a length between the forward edge and the aft edge, wherein the trailing edge length varies in length, wherein the trailing edge part is displaced from the leading edge part at a stagger angle, and wherein the stagger angle varies in displacement.

In various embodiments, at least one of the first surface of the trailing edge part may comprise a sinusoidal shape relative to the second surface such that the stagger angle varies in displacement, or the aft edge of the trailing edge part may comprise a sinusoidal shape relative to the forward edge such that the trailing edge length varies in length. At least one of the trailing edge length or the stagger angle may vary based on a vibration mode of a downstream rotor. The trailing edge length may vary in length from the inner diameter edge to the outer diameter edge, and the stagger angle may vary in displacement from the inner diameter edge to the outer diameter edge. The trailing edge part may comprise a first position between the inner diameter edge and the outer diameter edge, wherein the trailing edge length varies in length from the first position to the outer diameter edge, and wherein the stagger angle varies in displacement from the first position to the outer diameter edge. The trailing edge part may comprise the first position between the inner diameter edge and the outer diameter edge proximate the inner diameter edge and a second position between the inner diameter edge and the outer diameter edge proximate the outer diameter edge, wherein the trailing edge length varies in length from the first position to the second position, and wherein the stagger angle varies in displacement from the first position to the second position.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a cross-sectional view of an exemplary gas turbine engine, in accordance with various embodiments;
FIG. 2 illustrates a cross-sectional view of an exemplary gas turbine engine mounted to a pylon, in accordance with various embodiments;
FIG. 3A illustrates a perspective view of an inlet guide vane, in accordance with various embodiments; and
FIG. 3B illustrates a top view of an inlet guide vane, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

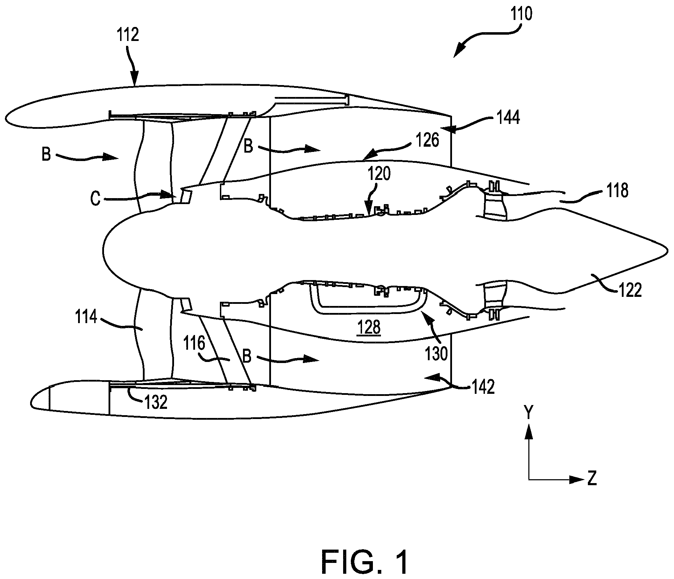

In various embodiments, and with reference to FIG. 1, a gas turbine engine 110 is disclosed. As used herein, "aft" refers to the direction associated with a tail (e.g., the back end) of an aircraft, or generally, to the direction of exhaust of gas turbine engine 120. As used herein, "forward" refers to the direction associated with a nose (e.g., the front end) of the aircraft, or generally, to the direction of flight or motion. An X-Y-Z axis has been included throughout the figures.

In various embodiments, gas turbine engine 110 may include core engine 120. Core air flow C flows through core engine 120 and is expelled through exhaust outlet 118 surrounding tail cone 122. Core engine 120 drives a fan 114 arranged in a bypass flow path B. Air in bypass flow-path B flows in the aft direction (z-direction) along bypass flow-path B. At least a portion of bypass flow path B may be defined by nacelle 112 and inner fixed structure (IFS) 126. Fan case 132 may surround fan 114. Fan case 132 may be housed within fan nacelle 112.

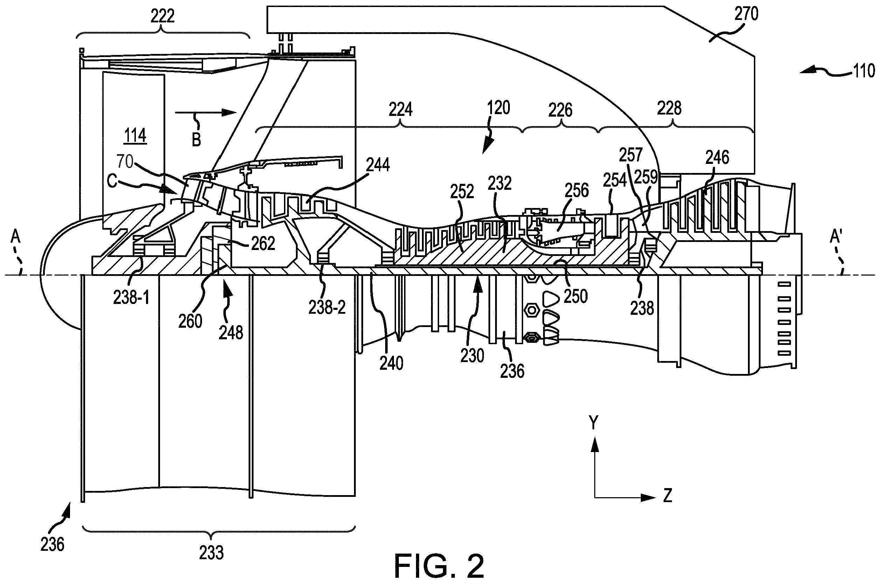

With momentary additional reference to FIG. 2, nacelle 112 typically comprises two halves which are typically mounted to pylon 270. Fan case structure 233 may provide structure for securing gas turbine engine 110 to pylon 270. According to various embodiments, multiple guide vanes 116 may extend radially between core engine 120 and fan case 132. Although FIG. 1 depicts guide vanes 116 located aft of fan 114, it should be understood that gas turbine engine 110 may also comprise a fan inlet guide vane located forward of fan 114 and configured to direct airflow into fan 114.

Upper bifurcation 144 and lower bifurcation 142 may extend radially between the nacelle 112 and IFS 126 in locations opposite one another to accommodate engine components such as wires and fluids, for example.

Inner fixed structure 126 surrounds core engine 120 and provides core compartments 128. Various components may be provided in core compartment 128 such as fluid conduits and/or a compressed air duct 130, for example. Compressed air duct 130 may be under high pressure and may supply compressed cooling air from a compressor stage to a high pressure turbine stage, for example. In various embodiments, a heat exchanger may be coupled to compressed air duct 130.

With respect to FIG. 2, elements with like element numbering as depicted in FIG. 1 are intended to be the same and will not necessarily be repeated for the sake of clarity.

In various embodiments and with reference to FIG. 2, a gas turbine engine 110 may be a two-spool turbofan that generally incorporates a fan section 222, a compressor section 224, a combustor section 226 and a turbine section 228. Alternative engines may include, for example, an augmenter section among other systems or features. In operation, fan section 222 can drive air along a bypass flow-path B while compressor section 224 can drive air along a core flow-path C for compression and communication into combustor section 226 then expansion through turbine section 228. Although depicted as a turbofan gas turbine engine 110 herein, it should be understood that the concepts described herein are not limited to use with two-spool turbofans as the teachings may be applied to other types of turbine engines including single-spool architectures, three-spool architectures, etc.

Gas turbine engine 110 may generally comprise a low speed spool 230 and a high speed spool 232 mounted for rotation about an engine central longitudinal axis A-A' relative to an engine static structure 236 via one or more bearing systems 238 (shown as bearing system 238-1 and bearing system 238-2 in FIG. 2). It should be understood that various bearing systems 238 at various locations may alternatively or additionally be provided including, for example, bearing system 238, bearing system 238-1, and bearing system 238-2.

Low speed spool 230 may generally comprise an inner shaft 240 that interconnects a fan 114, a low pressure (or first) compressor section 244 and a low pressure (or first) turbine section 246. Positioned between fan 114 and low pressure compressor section 244 is a fan exit stator 70. Fan exit stator 70 receives air from fan 114 and turns the air so that it flows towards low pressure compressor section 244. Inner shaft 240 may be connected to fan 114 through a geared architecture 248 that can drive fan 114 at a lower speed than low speed spool 230. Geared architecture 248 may comprise a gear assembly 260 enclosed within a gear housing 262. Gear assembly 260 couples inner shaft 240 to a rotating fan structure. High speed spool 232 may comprise an outer shaft 250 that interconnects a high-pressure compressor ("HPC") 252 (e.g., a second compressor section) and high pressure (or second) turbine section 254. A combustor 256 may be located between HPC 252 and high pressure turbine 254. A mid-turbine frame 257 of engine static structure 236 may be located generally between high pressure turbine 254 and low pressure turbine 246. Mid-turbine frame 257 may support one or more bearing systems 238 in turbine section 228. Inner shaft 240 and outer shaft 250 may be concentric and rotate via bearing systems 238 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 244 then HPC 252, mixed and burned with fuel in combustor 256, then expanded over high pressure turbine 254 and low pressure turbine 246. Mid-turbine frame 257 includes airfoils 259 which are in the core airflow path. Low pressure turbine 246 and high pressure turbine 254 rotationally drive the respective low speed spool 230 and high speed spool 232 in response to the expansion. Fan section 222, compressor section 224, and/or turbine section 228 may include rotatable blades and stationary vanes, including an inlet guide vane configured to direct air into each respective section.

Gas turbine engine 110 may be, for example, a high-bypass geared aircraft engine. In various embodiments, the bypass ratio of gas turbine engine 110 may be greater than about six (6). In various embodiments, the bypass ratio of gas turbine engine 110 may be greater than ten (10). In various embodiments, geared architecture 248 may be an epicyclic gear train, such as a star gear system (sun gear in meshing engagement with a plurality of star gears supported by a carrier and in meshing engagement with a ring gear) or other gear system. Geared architecture 248 may have a gear reduction ratio of greater than about 2.3 and low pressure turbine 246 may have a pressure ratio that is greater than about 5. In various embodiments, the bypass ratio of gas turbine engine 110 is greater than about ten (10:1). In various embodiments, the diameter of fan 114 may be significantly larger than that of the low pressure compressor 244, and the low pressure turbine 246 may have a pressure ratio that is greater than about 5:1. Low pressure turbine 246 pressure ratio may be measured prior to inlet of low pressure turbine 246 as related to the pressure at the outlet of low pressure turbine 246 prior to an exhaust nozzle. It should be understood, however, that the above parameters are exemplary of various embodiments of a suitable geared architecture engine and that the present disclosure contemplates other gas turbine engines including direct drive turbofans. FIG. 1 and FIG. 2A provide a general understanding of the sections in a gas turbine engine, and is not intended to limit the disclosure. The present disclosure may extend to all types of turbine engines, including turbofan gas turbine engines and turbojet engines, for all types of applications.

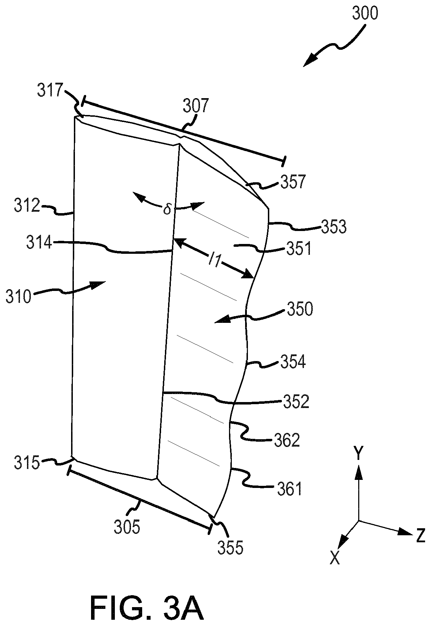

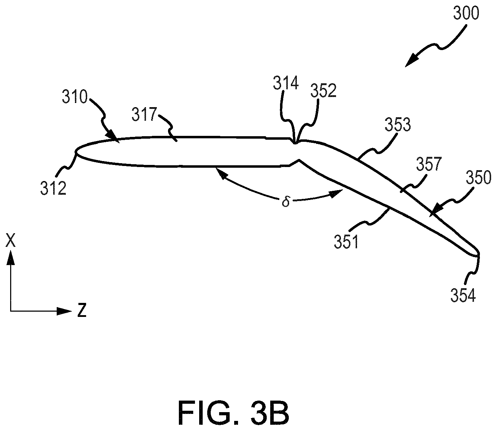

In various embodiments, and with reference to FIGs. 3A and 3B, an inlet guide vane 300 is disclosed. Inlet guide vane 300 may be configured to direct airflow to various components of a gas turbine engine (e.g., gas turbine engine 110, with brief reference to FIG. 2). Inlet guide vane 300 may comprise a gas turbine engine component for use as an airfoil. For example, inlet guide vane 300 may comprise an inlet guide vane in a gas turbine engine. In that respect, inlet guide vane 300 may comprise a fan section inlet guide vane, a compressor section inlet guide vane, a turbine section inlet guide vane, or the like. Inlet guide vane 300 may comprise a fixed (e.g., non-variable) inlet guide vane or a variable inlet guide vane configured to actuate to variably direct airflow through the gas turbine engine. Inlet guide vane 300 may comprise an inner diameter edge 305 opposite an outer diameter edge 307. Inner diameter edge 305 may be configured to couple inlet guide vane 300 to an inner structure in a gas turbine engine and outer diameter edge 307 may be configured to couple inlet guide vane 300 to an outer structure in the gas turbine engine.

In various embodiments, inlet guide vane 300 may comprise a leading edge part 310 forward of a trailing edge part 350. Leading edge part 310 and trailing edge part 350 may be formed as an integral component, or may comprise separate components coupled together.

Leading edge part 310 may comprise a first forward edge 312 opposite a first aft edge 314. Leading edge part 310 may comprise a first inner diameter edge 315 opposite a first outer diameter edge 317. Trailing edge part 350 may comprise a second forward edge 352 opposite a second aft edge 354. Trailing edge part 350 may comprise a first surface 351 opposite a second surface 353. Trailing edge part 350 may comprise a second inner diameter edge 355 opposite a second outer diameter edge 357. Second forward edge 352 may couple to first aft edge 314 to couple leading edge part 310 to trailing edge part 350. First inner diameter edge 315 and second inner diameter edge 355 may define inner diameter edge 305. First outer diameter edge 317 and second outer diameter edge 357 may collectively define outer diameter edge 307 of inlet guide vane 300.

In various embodiments, trailing edge part 350 may comprise a non-uniform geometry configured to at least partially reduce resonant stress on downstream rotors. For example, as air flows over typical inlet guide vanes, the trailing edge geometry of the inlet guide vane can lead to the generation of relatively uniform and straight air wakes as the air exits the inlet guide vane. In response to the air wakes contacting downstream rotors (blades), the rotors may experience resonant stress resulting from an unsteadying forcing of the rotor caused by the relatively uniform and straight air wakes. In that respect, trailing edge part 350 may comprise a variable and non-uniform geometry configured to generate non-uniform and varied air wakes to at least partially reduce resonant stress on downstream rotors, as discussed further herein.

In various embodiments, trailing edge part 350 may comprise a trailing edge length 11. Trailing edge length 11 may define a length of trailing edge part 350 extending from second forward edge 352 to second aft edge 354. Trailing edge length 11 may comprise any suitable or desired length, and may be based on operational factors, such as, for example, the location of inlet guide vane 300 (e.g., a fan inlet guide vane may comprise a longer trailing edge length 11 compared to a compressor inlet guide vane).

In various embodiments, trailing edge part 350 may comprise a varied and non-uniform trailing edge length 11 (e.g., trailing edge length 11 may vary along the Y-axis). Trailing edge length 11 may comprise any suitable variation and non-uniformity in length, and may be configured to at least partially reduce resonant stress on downstream rotors during gas turbine engine operation. For example, and in accordance with various embodiments, trailing edge length 11 may vary in length from second inner diameter edge 355 to second outer diameter edge 357. In various embodiments, trailing edge length 11 may also vary in length for only a portion of second inner diameter edge 355 to second outer diameter edge 357. For example, trailing edge length 11 may vary in length from a first position (e.g., a position on trailing edge part 350 between second inner diameter edge 355 and second outer diameter edge 357) to second outer diameter edge 357. For example, trailing edge length 11 may also vary in length from the first position (e.g., a first position on trailing edge part 350 between second inner diameter edge 355 and second outer diameter edge 357, proximate second inner diameter edge 355) to a second position (e.g., e.g., a second position on trailing edge part 350 between second inner diameter edge 355 and second outer diameter edge 357, proximate second outer diameter edge 357). As a further example, and in accordance with various embodiments, trailing edge length 11 may vary in length based on a vibration mode from a downstream (e.g., aft) rotor (blade). The vibration mode may be characterized by a modal frequency and a modal shape. For example, in response to air impinging against the downstream rotor, the vibrations in the downstream rotor may be measured to determine the vibration mode. Vibration caused by airflow impinging on the downstream rotor may be measured to determine the vibration mode of the downstream rotor. Trailing edge length 11 and the shape of second aft edge 354 may be modified to produce air wakes corresponding to the vibration mode.

As a further example, second aft edge 354 may comprise a sinusoidal shape relative to second forward edge 352. Second aft edge 354 may comprise a sinusoidal shape having one or more peaks 361 between one or more valleys 362. In that respect, trailing edge length 11 may comprise a longer length at each peak 361, and a shorter length at each valley 362. Second aft edge 354 may comprise a sinusoidal shape having one or more sin periods along the radial length of second aft edge 354 (e.g., along the Y-axis). For example, second aft edge 354 may comprise a sinusoidal shape wherein the radial length of first surface 351 includes two sin periods. In various embodiments, trailing edge length 11 at each valley 362 may comprise different lengths. In various embodiments, trailing edge length 11 at each peak 361 may comprise different lengths.

As a further example, trailing edge length 11 may vary in length axially (i.e., along the Z-axis) relative to an arithmetic mean length of trailing edge part 350 measured axially (i.e., along the Z-axis). For example, trailing edge length 11 may vary from +/- about 1 percent to about 5 percent, about 5 percent to about 10 percent, or about 10 percent to about 15 percent, relative to the arithmetic mean length of trailing edge part 350 (wherein about in this context refers only to +/- 0.50 percent). In various embodiments, trailing edge length 11 may vary in length from +/- about 5 percent to about 10 percent, relative to the arithmetic mean length of trailing edge part 350. Although the present disclosure references varying trailing edge length 11 relative to the arithmetic mean length of trailing edge part 350, it should be understood that trailing edge length 11 may also vary relative to trailing edge lengths of conventionally designed trailing edge parts.

In various embodiments, trailing edge part 350 may be coupled to (or integrally formed with) leading edge part 310 at a stagger angle delta ("δ"). Stagger angle δ may define an angle from which trailing edge part 350 is displaced relative to leading edge part 310. Stagger angle δ may comprise any suitable or desired angle, and may be based on operational factors in the gas turbine engine.

In various embodiments, trailing edge part 350 may comprise a varied and non-uniform stagger angle δ (e.g., stagger angle δ may vary along the Z-axis). Stagger angle δ may comprise any suitable variation and non-uniformity, and may be configured to at least partially reduce resonant stress on downstream rotors during gas turbine engine operation. For example, and in accordance with various embodiments, stagger angle δ may vary in displacement from second inner diameter edge 355 to second outer diameter edge 357. In various embodiments, stagger angle δ may also vary in displacement for only a portion of second inner diameter edge 355 to second outer diameter edge 357. For example, stagger angle δ may vary in displacement from a first position (e.g., a position on trailing edge part 350 between second inner diameter edge 355 and second outer diameter edge 357) to second outer diameter edge 357. For example, stagger angle δ may also vary in displacement from the first position (e.g., a first position on trailing edge part 350 between second inner diameter edge 355 and second outer diameter edge 357, proximate second inner diameter edge 355) to a second position (e.g., a second position on trailing edge part 350 between second inner diameter edge 355 and second outer diameter edge 357, proximate second outer diameter edge 357). As a further example, and in accordance with various embodiments, stagger angle δ may vary in displacement based on a vibration mode from a downstream (e.g., aft) rotor (blade). The vibration mode may be characterized by a modal frequency and a modal shape. For example, in response to air impinging against the downstream rotor, the vibrations in the downstream rotor may be measured to determine the vibration mode. Vibration caused by airflow impinging on the downstream rotor may be measured to determine the vibration mode of the downstream rotor. Stagger angle δ and the shape of first surface 351 may be modified to produce air wakes corresponding to the vibration mode.

As a further example, first surface 351 may comprise a sinusoidal shape relative to second surface 353. First surface 351 may comprise a sinusoidal shape having one or more peaks between one or more valleys (relative to the X-axis). In that respect, stagger angle δ may comprise a smaller angle at each peak, and a larger angle at each valley. First surface 351 may comprise a sinusoidal shape having one or more sin periods along the radial length of first surface 351 (e.g., along the Y-axis). For example, first surface 351 may comprise a sinusoidal shape wherein the radial length of first surface 351 includes two sin periods. In various embodiments, stagger angle δ at each valley may each comprise different angles. In various embodiments, stagger angle δ at each peak may each comprise different angles.

As a further example, stagger angle δ may vary in displacement relative to an arithmetic mean stagger angle δ of trailing edge part 350. For example, stagger angle δ may vary in displacement from +/- about 1 degree to about 3 degrees, about 3 degrees to about 7 degrees, or about 7 degrees to about 10 degrees, about 10 degrees to about 15 degrees, or about 15 degrees to about 20 degrees relative to the arithmetic mean stagger angle δ of trailing edge part 350 (wherein about in this context refers only to +/- 0.50 degree). In various embodiments, stagger angle δ may vary in displacement from +/about 2 degrees to about 6 degrees, relative to the arithmetic mean stagger angle δ of trailing edge part 350. Although the present disclosure references varying stagger angle δ relative to the arithmetic mean stagger angle δ of trailing edge part 350, it should be understood that stagger angle δ may also vary relative to trailing edge lengths of conventionally designed trailing edge parts.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An inlet guide vane, comprising:
an inner diameter edge opposite an outer diameter edge;
a leading edge part; and
a trailing edge part having a forward edge opposite an aft edge and a first surface opposite a second surface, wherein the forward edge is coupled to the leading edge part, wherein the trailing edge part comprises a trailing edge length defining a length between the forward edge and the aft edge, wherein the trailing edge length varies in length, wherein the trailing edge part is displaced from the leading edge part at a stagger angle, and wherein the stagger angle varies in displacement.

2. The inlet guide vane of claim 1, wherein the first surface of the trailing edge part comprises a sinusoidal shape relative to the second surface such that the stagger angle varies in displacement.

3. A gas turbine engine component for use as an airfoil, the gas turbine engine component comprising:
a leading edge part; and
a trailing edge part integrally formed with the leading edge part, the trailing edge part having a forward edge opposite an aft edge and an inner diameter edge opposite an outer diameter edge, wherein the trailing edge part comprises a trailing edge length defining a length between the forward edge and the aft edge, wherein the trailing edge length varies in length, wherein the trailing edge part is displaced from the leading edge part at a stagger angle, and wherein the stagger angle varies in displacement.

4. The gas turbine engine component of claim 3, wherein the trailing edge part comprises a first surface opposite a second surface, and wherein the first surface comprises a sinusoidal shape relative to the second surface such that the stagger angle varies in displacement.

5. The inlet guide vane of claim 1 or 2, or the gas turbine engine component of claim 3 or 4, wherein the aft edge of the trailing edge part comprises a sinusoidal shape relative to the forward edge such that the trailing edge length varies in length.

6. The inlet guide vane of claim 1, 2 or 5, or the gas turbine engine component of claim 3, 4 or 5, wherein at least one of the trailing edge length or the stagger angle vary based on a vibration mode of a downstream rotor.

7. The inlet guide vane of claim 1, 2, 5 or 6, or the gas turbine engine component of any of claims 3 to 6, wherein the trailing edge length varies in length from the inner diameter edge to the outer diameter edge, and wherein the stagger angle varies in displacement from the inner diameter edge to the outer diameter edge.

8. The inlet guide vane of claim 1, 2, 5, 6 or 7, or the gas turbine engine component of any of claims 3 to 7, wherein the trailing edge part comprises a first position between the inner diameter edge and the outer diameter edge, wherein the trailing edge length varies in length from the first position to the outer diameter edge, and wherein the stagger angle varies in displacement from the first position to the outer diameter edge.

9. The inlet guide vane of claim 1, 2, 5, 6, 7 or 8, or the gas turbine engine component of any of claims 3 to 8, wherein the trailing edge part comprises the first position between the inner diameter edge and the outer diameter edge proximate the inner diameter edge and a second position between the inner diameter edge and the outer diameter edge proximate the outer diameter edge, wherein the trailing edge length varies in length from the first position to the second position, and wherein the stagger angle varies in displacement from the first position to the second position.

10. A gas turbine engine, comprising:
a fan section;
a compressor section; and
a turbine section,
wherein at least one of the fan section, the compressor section, or the turbine section has an inlet guide vane for directing airflow, the inlet guide vane comprising:
an inner diameter edge opposite an outer diameter edge;
a leading edge part; and
a trailing edge part having a forward edge opposite an aft edge and a first surface opposite a second surface, wherein the forward edge is coupled to the leading edge part, wherein the trailing edge part comprises a trailing edge length defining a length between the forward edge and the aft edge, wherein the trailing edge length varies in length, wherein the trailing edge part is displaced from the leading edge part at a stagger angle, and wherein the stagger angle varies in displacement.

11. The gas turbine engine of claim 10, wherein at least one of the first surface of the trailing edge part comprises a sinusoidal shape relative to the second surface such that the stagger angle varies in displacement, or the aft edge of the trailing edge part comprises a sinusoidal shape relative to the forward edge such that the trailing edge length varies in length.

12. The gas turbine engine of claim 10 or 11, wherein at least one of the trailing edge length or the stagger angle vary based on a vibration mode of a downstream rotor.

13. The gas turbine engine of claim 10, 11 or 12, wherein the trailing edge length varies in length from the inner diameter edge to the outer diameter edge, and wherein the stagger angle varies in displacement from the inner diameter edge to the outer diameter edge.

14. The gas turbine engine of any of claims 10 to 13, wherein the trailing edge part comprises a first position between the inner diameter edge and the outer diameter edge, wherein the trailing edge length varies in length from the first position to the outer diameter edge, and wherein the stagger angle varies in displacement from the first position to the outer diameter edge.

15. The gas turbine engine of any of claims 10 to 14, wherein the trailing edge part comprises the first position between the inner diameter edge and the outer diameter edge proximate the inner diameter edge and a second position between the inner diameter edge and the outer diameter edge proximate the outer diameter edge, wherein the trailing edge length varies in length from the first position to the second position, and wherein the stagger angle varies in displacement from the first position to the second position.
